# EUROPEAN PATENT SPECIFICATION

(11) **EP 1 515 015 B1**
(45) Date of publication and mention of the grant of the patent: **09.05.2012**
(21) Application number: 04021603.8
(22) Date of filing: 10.09.2004
(51) Int. Cl.: F01N 3/20, F01N 9/00

(54) **Exhaust purifying apparatus of internal combustion engine**
Abgasreinigungsanlage für eine Brennkraftmaschine
Dispositif de purification des gaz d'échappement pour moteur à combustion interne

(30) Priority: 11.09.2003 JP 2003320028
(43) Date of publication of application: 16.03.2005
(73) Proprietor: Toyota Jidosha Kabushiki Kaisha, Toyota-shi, Aichi-ken, 471-8571 (JP); KABUSHIKI KAISHA TOYOTA JIDOSHOKKI, Kariya-shi, Aichi-ken (JP)
(72) Inventor: Matsuoka, Hiroki, c/o Toyota Jidosha K. K., Toyota-shi, Aichi-ken 471-8571 (JP); Yamamoto, Yukihisa, c/o K. K. Toyota Jidoshokki, Kariya-shi, Aichi-ken (JP)
(74) Representative: TBK

(56) References cited:
- EP-A2- 0 743 429
- WO-A2-97/12129
- DE-A1- 19 739 751
- JP-A- 5 044 434

## Description

The present invention relates to an exhaust purifying apparatus of an internal combustion engine that increases the temperature of a catalyst provided in the exhaust system of the engine by supplying unburned fuel components to the catalyst.

As disclosed in Japanese Laid-Open Patent Publication No. 5-44434, some of exhaust purifying apparatus applied for vehicle diesel engines include a catalyst for purifying exhaust and a fuel adding valve for adding fuel to exhaust before the exhaust is purified by the catalyst. In such an exhaust purifying apparatus, a temperature increase process is typically performed in which fuel is added to exhaust from the fuel adding valve to increase the bed temperature of the catalyst.

In the fuel increase process, addition of fuel to exhaust from the fuel adding valve directly feeds fuel to the catalyst. As a result, unburned fuel components such as hydrocarbon (HC), carbon monoxide (CO), and oxygen (O₂) are supplied to the catalyst. The unburned fuel components are oxidized in the exhaust or the catalyst and generate heat. Accordingly, the temperature of the catalyst is increased.

However, depending on the operating condition of the engine, the catalyst can be deactivated during the temperature increase process due to a drop of the exhaust temperature. This hinders the oxidation of the unburned fuel components and causes the unburned fuel components to collect and remain on the catalyst. As a result, the surface area of the catalyst that is exposed to exhaust is reduced, which further lowers the level of activation of the catalyst. In this manner, the catalyst bed temperature is lowered even if unburned fuel components are being supplied.

If the catalyst is deactivated during the temperature increase process, unburned fuel components that have been supplied to the catalyst are exhausted to the outside without being completely combusted. Therefore, the exhaust emission can be deteriorated. For example, a great amount of smoke may be emitted. Further, if a great amount of unburned components collects on the surface of the catalyst surface, an increase in the exhaust temperature and an accompanying deactivation of the catalyst cause the unburned fuel deposited on the catalyst surface to be suddenly oxidized. Consequently, a great amount heat is produced in a short time, which can excessively increase the catalyst temperature.

DE 19739751 A1 discloses an exhaust gas cleaning system which calculates the level of nitrous oxides in the engine exhaust gas from the detected position of the accelerator pedal and the engine revs, used in conjunction with the operating temperature of the exhaust gas catalyser (13) detected at a number of points, for controlling the hydrocarbon feed for the catalyser, to ensure catalytic conversion of the nitrous oxides. A feedback device (30) may be used for feeding back part of the engine exhaust gases back to the engine air intake, with the hydrocarbon feed for the catalyst corrected during initial acceleration.

### SUMMARY OF THE INVENTION

Accordingly, it is an objective of the present invention to provide an exhaust purifying apparatus of an internal combustion engine that favorably eliminates disadvantages due to deactivation of a catalyst during a temperature increase process.

To achieve the foregoing and other objectives and in accordance with the purpose of the present invention, an exhaust purifying apparatus that performs a temperature increase process, in which the apparatus supplies unburned fuel components to a catalyst provided in an exhaust system of an internal combustion engine, thereby increasing a bed temperature of the catalyst, is provided. The apparatus includes suspension means. In a case where the catalyst bed temperature is detected to be increased by supply of unburned fuel components after the start of the temperature increase process, the suspension means suspends the supply of unburned fuel components to the catalyst if the catalyst bed temperature is detected to be lowered to a level equal to or lower than an activation determination temperature that indicates that the catalyst is in an activated state.

The present invention further provides an exhaust purifying method in which a temperature increase process is performed. In the temperature increase process, unburned fuel components is supplied to a catalyst provided in an exhaust system of an internal combustion engine, so that a bed temperature of the catalyst is increased. The method includes: detecting that the catalyst bed temperature is increased by supply of unburned fuel components after the start of the temperature increase process; and in a case where the catalyst bed temperature is detected to be increased, suspending the supply of unburned fuel components to the catalyst if the catalyst bed temperature is detected to be lowered to a level equal to or lower than an activation determination temperature that indicates that the catalyst is in an activated state.

Other aspects and advantages of the present invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a schematic diagram illustrating an internal combustion engine according to one embodiment of the present invention;
Fig. 2 is a diagram showing the relationship between an input gas temperature THCI and a reference temperature TEMPNSR;
Fig. 3 is a flowchart showing a routine for determining whether a procedure for detecting a deactivated state of a catalyst can be executed;
Fig. 4 is a flowchart showing a routine related to a suspension process;
Fig. 5 is a time chart showing a state when the suspension process of Fig. 4 is executed;
Fig. 6 is a flowchart showing part of a routine related to an suspension process according to a first modification; and
Fig. 7 is a flowchart showing a routine for determining whether a procedure for detecting a deactivated state of a catalyst according to a second modification can be executed.

### DETAILED DESCRIPTION OF THE PREFERRED EMBODIMENTS

An exhaust purifying apparatus of an internal combustion engine according to one embodiment of the present invention will now be described with reference to drawings.

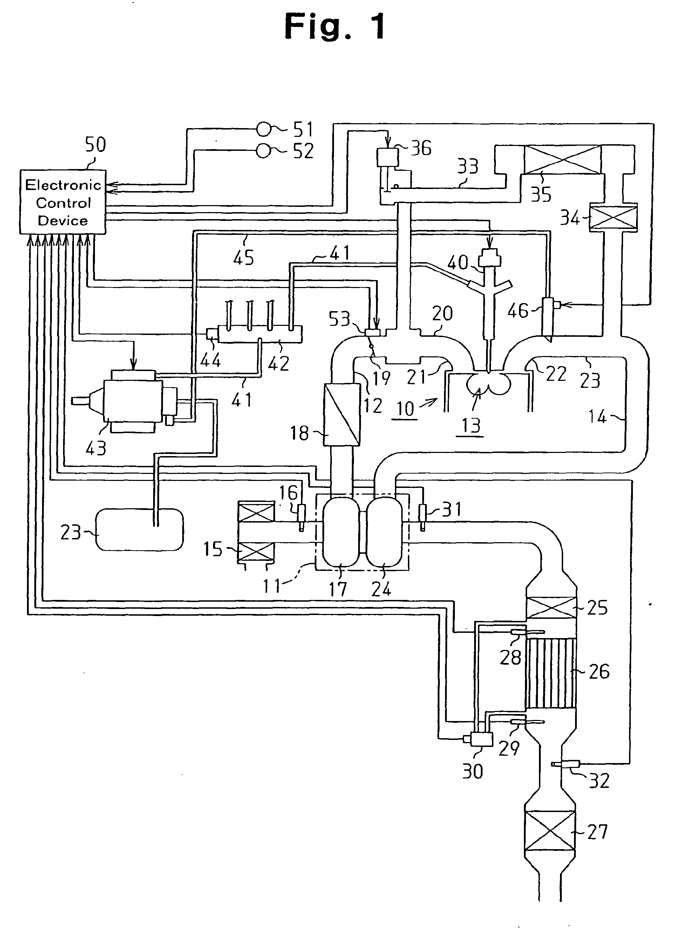

Fig. 1 illustrates the configuration of an internal combustion engine 10 according to this embodiment. The internal combustion engine 10 is a diesel engine having a common rail fuel injection device and a turbocharger 11. The internal combustion engine 10 includes an intake passage 12, combustion chambers 13, and an exhaust passage 14 as main components.

The intake passage 12 forms an intake system of the internal combustion engine 10. In the most upstream section of the intake passage 12, an air cleaner 15 is located. From the air cleaner 15 toward the downstream side, the air flow meter 16, a compressor 17 incorporated in the turbocharger 11, an intercooler 18, and an intake throttle valve 19 are provided in the intake passage 12. The intake passage 12 is branched at an intake manifold 20 located downstream of the intake throttle valve 19, and connected to each of the combustion chambers 13 of the internal combustion engine 10 through intake ports 21.

In the exhaust passage 14, which forms an exhaust system of the internal combustion engine 10, an exhaust port 22 is connected to each combustion chamber 13. The exhaust ports 22 are connected to an exhaust turbine 24 of the turbocharger 11 through an exhaust manifold 23. In a section of the exhaust passage 14 that is downstream of the exhaust turbine 24, a NOx catalyst converter 25, a PM filter 26, and an oxidation catalyst converter 27 are provided in this order from the upstream side to the downstream side.

The NOx catalyst converter 25 supports an occlusion-reduction NOx catalyst. The NOx catalyst occludes NOx (nitrogen oxide) in exhaust when the concentration of oxygen in exhaust is high, and emits the occluded NOx into exhaust when the concentration of oxygen in the exhaust is low. If the amount of unburned fuel components, which function as a reducing agent, about the catalyst is sufficient when NOx is emitted from the NOx catalyst, the emitted NOx is occluded. As a result, the exhaust is purified.

The PM filter 26 is made of a porous material and traps particulate matter (PM) in exhaust. Like the NOx catalyst converter 25, the PM filter 26 supports an occlusion-reduction NOx catalyst. The NOx catalyst of the PM filter 26 also contributes to reduction of NOx in exhaust. The trapped particulate matter is combusted (oxidized) in a reaction that is promoted by the NOx catalyst.

The oxidation catalyst converter 27 supports an oxidation catalyst. The oxidation catalyst functions to oxide hydrocarbon (HC) and carbon oxide (CO) in exhaust to purify the exhaust.

In sections upstream of and downstream of the PM filter 26, an input gas temperature sensor 28 and an output gas temperature sensor 29 are provided, respectively. The input gas temperature sensor 28 detects an input gas temperature, which is the temperature of exhaust that flows into the PM filter 26. The output gas temperature sensor 29 detects an output gas temperature, which is the temperature of exhaust that has passed through the PM filter 26. Also, a differential pressure sensor 30 is provided in the exhaust passage 14. The differential pressure sensor 30 detects a pressure difference between a section upstream and a section downstream of the PM filter 26. Oxygen sensors 31, 32 are located in a section of the exhaust passage 14 that is upstream of the NOx catalyst converter 25 and a section of the exhaust passage 14 between the PM filter 26 and the oxidation catalyst converter 27, respectively. The oxygen sensors 31, 32 detect the concentration of oxygen in exhaust.

The internal combustion engine 10 further includes an exhaust gas recirculation device (EGR device) for returning some of exhaust to the intake passage 12. The EGR device includes an EGR passage 33 that connects the exhaust passage 14 with the intake passage 12. The most upstream part of the EGR passage 33 is connected to a section of the exhaust passage 14 that is upstream of the exhaust turbine 24. In the EGR passage 33, an EGR catalyst 34, an EGR cooler 35, and an EGR valve 36 are provided in this order from the upstream side to the downstream side. The EGR catalyst 34 reforms recirculated exhaust. The EGR cooler 35 cools the reformed exhaust. The EGR valve 36 adjusts the flow rate of the reformed and cooled exhaust. The most downstream part of the EGR passage 33 is connected to a section of the intake passage 12 that is downstream of the intake throttle valve 19.

An injector 40 is provided in each combustion chamber 13 of the internal combustion engine 10 to inject fuel to be combusted in the combustion chamber 13. The injectors 40 are connected to a common rail 42 with a high-pressure fuel pipe 41. High-pressure fuel is supplied to the common rail 42 through a fuel pump 43. The pressure of high-pressure fuel in the common rail 42 is detected by a rail pressure sensor 44 attached to the common rail 42. The fuel pump 43 is capable of supplying low-pressure fuel to a fuel adding valve 46 through a low-pressure fuel pipe 45.

Various control procedures of the internal combustion engine 10 are executed by an electronic control device 50. The electronic control device 50 includes a CPU that executes various computation processes related to control of the engine 10, a ROM storing programs and data necessary for the control, a RAM for temporarily storing the computation results of the CPU, and input and output ports for inputting and outputting signals from and to the outside.

In addition to the above described sensors, the input port of the electronic control device 50 is connected to an NE sensor 51 for detecting the rotation speed of the engine 10, an acceleration sensor 52 for detecting an acceleration manipulation amount, and a throttle valve sensor 53 for detecting the opening degree of the intake throttle valve 19. The output port of the electronic control device 50 is connected to a drive circuits for driving the intake throttle valve 19, the EGR valve 36, the injector 40, the fuel pump 43, and the fuel adding valve 46.

Based on detected signals of the above described sensors, the electronic control device 50 grasps the operating condition of the engine 10. According to the grasped operating condition, the electronic control device 50 outputs command signals to the drive circuits of the devices connected to the output port. For example, the electronic control device 50 executes various control procedures such as control of the opening degree of the intake throttle valve 19, EGR control based on the opening degree control of the EGR valve 36, control of the amount, the timing and the pressure of fuel injection from the injector 40, and control related to fuel addition by the fuel adding valve 46.

In the internal combustion engine 10 of this embodiment, a regeneration process for regenerating the PM filter 26 and a process for eliminating sulfur poisoning of the NOx catalyst are executed as necessary. The purpose of the regeneration process of the PM filter 26 is to combust and remove particulate matter trapped by the PM filter 26 to preventing clogging of the PM filter 26. The objective of the sulfur poisoning elimination process is to restore the NOx occlusion capacity of the NOx catalyst supported by the NOx catalyst converter 25 and the PM filter 26, which capacity is lowered when the sulfur oxide (SOx) is occluded.

When performing the regeneration process of the PM filter 26 and the sulfur poisoning elimination process, the catalyst bed temperature of the NOx catalyst converter 25 and the PM filter 26 must be sufficiently high. When executing these processes, a temperature increase process is executed for increasing the catalyst bed temperature to a level suitable for regeneration of the PM filter 26 and elimination of sulfur poisoning (for example 600°C to 700°C). In the temperature increase process, unburned fuel components are supplied to the NOx catalyst. The unburned fuel components are oxidized in the exhaust or the catalyst and generate heat. Accordingly, the catalyst bed temperature is increased. When increasing the amount of unburned fuel supplied to the NOx catalyst, addition of fuel from the fuel adding valve 46 to exhaust is repeated at relatively short intervals.

The temperature increase process is executed only when all of the following five requirements are satisfied.

The regeneration process of the PM filter 26 or the sulfur poisoning elimination process is demanded. The regeneration process of the PM filter 26 is demanded when, based on detected results of the differential pressure sensor 30, clogging of the PM filter 26 is detected. The sulfur poisoning elimination process is demanded when the amount of occluded SOx, which is computed based on the histories of operation of the engine 10, surpasses a predetermined value.

An input gas temperature THCI detected by the input gas temperature sensor 28 is no less than a predetermined value (for example, 150°C), and the bed temperature of the NOx catalyst estimated based on the operation history of the engine 10 is no less than a predetermined value. These predetermined values are minimum values of the exhaust temperature and the catalyst bed temperature required for promoting oxidation of the unburned fuel components supplied to increase the catalyst bed temperature.

The input gas temperature detected by the input gas temperature sensor 28 is less than the upper limit value in a temperature range for avoiding excessive heating of the catalyst due to the temperature increase process.

The output gas temperature detected by the output gas temperature sensor 29 is less than the upper limit value in a temperature range for avoiding excessive heating of the catalyst due to the temperature increase process.

Addition of fuel to exhaust is permitted. That is, the operating condition of the engine 10 permits the addition of fuel to exhaust. In principle, the addition of fuel to exhaust is permitted in the internal combustion engine 10 as long as the engine 10 is not stalling, the cylinders have been distinguished, and the depression degree of the acceleration pedal is not limited.

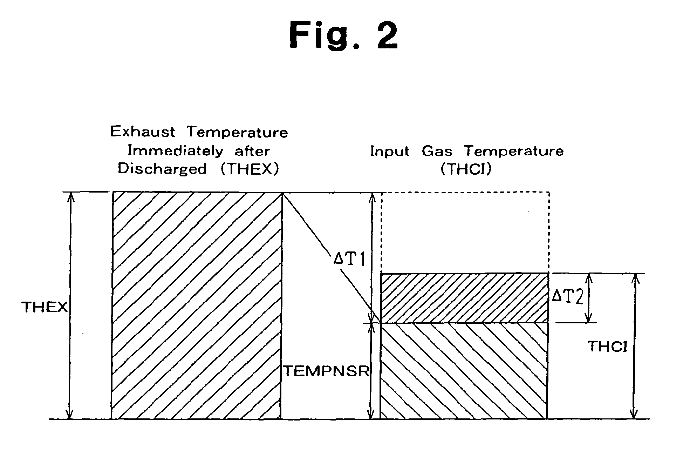

To avoid drawbacks due to deactivation of the catalyst during the temperature increase process, a suspension process for suspending addition of fuel to exhaust from the fuel adding valve 46 is executed in the internal combustion engine 10. The suspension process is executed when deactivation of the catalyst is detected during the temperature increase process. The suspension process will now be described with reference to Figs. 2 to 5.

In the suspension process, based on the difference THNSRDL between the input gas temperature THCI detected by the input gas temperature sensor 28 located downstream of the NOx catalyst converter 25 and a reference temperature TEMPNSR, deactivation of the catalyst is detected. The reference temperature TEMPNSR is a value of the input gas temperature THCI, which is estimated on the assumption that the NOx catalyst supported by the NOx catalyst converter 25 is completely deactivated, that is, no heat is generated by reaction promoted by the NOx catalyst. The reference temperature TEMPNSR is determined, for example, based on the operation histories of the engine 10, such as the engine rotation speed NE and the engine load (for example, fuel injection amount Qfin). That is, the reference temperature TEMPNSR is gradually lowered when the temperature of exhaust from the combustion chambers 13 is relatively low, and is gradually increased when the exhaust temperature is relatively high.

Suppose that the temperature of exhaust immediately after being discharged from the combustion chambers 13 is denoted as THEX, the amount of temperature drop from when the exhaust is discharged from the combustion chambers 13 to when the exhaust reaches the input gas temperature sensor 28, which temperature drop is due to heat dissipation in the exhaust passage 14, is denoted as ΔT1, and the amount of temperature increase due to heat production of oxidation of the unburned fuel components in the NOx catalyst converter 25 is denoted as ΔT2. In this case, as shown in Fig. 2, the input gas temperature THCI is expressed by an equation: THCI = THEX - ΔT1 + ΔT2. On the other hand, the reference temperature TEMPNSR is expressed by an equation: TEMPNSR = THCI - ΔT2 = THEX - ΔT1.

When the catalyst is deactivated, heat production of oxidation of the supplied unburned fuel components is reduced. This reduces the temperature decrease amount ΔT2, and as a result, the input gas temperature THCI approaches the reference temperature TEMPNSR. Therefore, deactivation of the catalyst is detected when the difference THNSRDL (= THCI - TEMPNSR) between the input gas temperature THCI and the reference temperature TEMPNSR is decreased during the temperature increase process.

Deactivation of the catalyst is also detected by using the output gas temperature detected by the output gas temperature sensor 29 located downstream of the PM filter 26, instead of the input gas temperature THCI. However, when unburned fuel components are supplied to exhaust from the fuel adding valve 46, the catalyst bed temperature of the NOx catalyst converter 25 is increased prior to increase of the catalyst bed temperature of the PM filter 26. Thus, deactivation of the catalyst is detected in an earlier stage in the case where the input gas temperature THCI is used than in the case where the output gas temperature is used.

There is a certain time lag between when supply of unburned fuel components is started and when the catalyst bed temperature is increased. During this period, the difference THNSRDL has a small value. Particularly, when the temperature increase process is executed at a relatively low exhaust temperature, the difference THNSRDL stays at a low value for a relatively long period. Thus, in this embodiment, if the catalyst bed temperature is decreased after an increase of the catalyst bed temperature due to supply of unburned fuel components is detected after the start of the temperature increase process, the catalyst is judged to be deactivated. Accordingly, a state in which the difference THNSRDL is small and continuous supply of unburned fuel components is likely to increase the catalyst bed temperature is clearly distinguished from a state in which the catalyst is deactivated and continuous supply of unburned fuel components is unlikely to increase the catalyst bed temperature.

Deactivation of the catalyst is mainly caused by a low temperature of exhaust. It has been discovered that deactivation of the catalyst occurs only when the temperature increase process is executed while the temperature of exhaust flowing into the catalyst is low. Accordingly, in this embodiment, a temperature THT4 of exhaust immediately after being discharged from the combustion chambers 13 is estimated based on the operating condition of the engine 10. A wall temperature THEXM of the exhaust manifold 23 is also estimated based on the operating condition of the engine 10. Only when the temperature THT4 and the wall temperature THEXM are both equal to or less than a predetermined value (for example, 220°C), the process for detecting deactivation of the catalyst is executed based on the difference THNSRDL between the input gas temperature THCI and the referential temperature TEMPNSR.

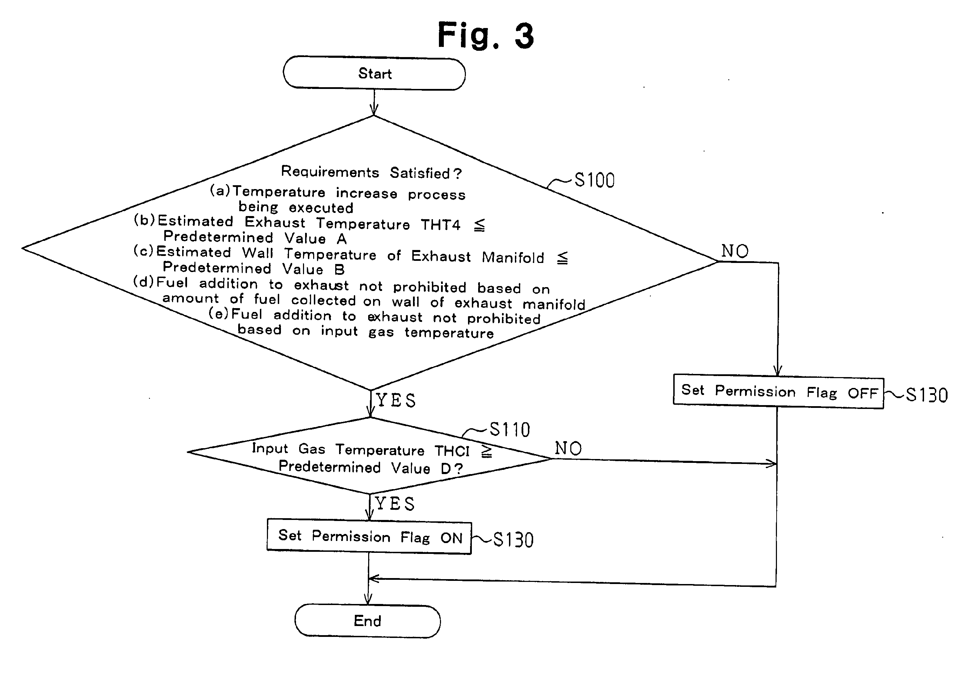

Fig. 3 is a flowchart showing a routine for determining whether the procedure for detecting a deactivated state of a catalyst can be executed based on the difference THNSRDL. The routine shown in Fig. 3 is repeatedly executed by the electronic control device 50 at a predetermined interval while the engine 10 is running. That is, the routine is a periodical interruption process routine. In this routine, a permission flag is manipulated, which indicates whether the performance of the process for detecting deactivation of the catalyst based on the difference THNSRDL is permitted.

As shown in Fig. 3, the electronic control device 50 determines whether requirements for performing the process for detecting deactivation of the catalyst are satisfied at step S100. When determining that the requirements are satisfied, the electronic control device 50 proceeds to step S110. When determining that the requirements are not satisfied, the electronic control device 50 proceeds to step S130. At step S130, the electronic control device 50 sets the permission flag off and ends the routine.

The requirements include the following four requirements (a) to (e).
(a) The temperature increase process is being executed.
(b) The estimated exhaust temperature THT4 is equal to or less than a predetermined value A (for example, 220°C).
(c) The estimated wall temperature THEXM of the exhaust manifold 23 is equal to or less than a predetermined value B (for example, 220°C).
(d) Addition of fuel is not prohibited based on the amount of fuel collected on the wall of the exhaust manifold 23.
(e) Addition of fuel is not prohibited based on the input gas temperature THCI.

The amount of fuel collected on the wall of the exhaust manifold 23 is estimated based on the histories of the exhaust temperature, the outside temperature, the amount of fuel added to exhaust, and the fuel injection amount into the combustion chamber 13. Addition of fuel to exhaust is permitted only when the amount of fuel collected on the wall of the exhaust manifold 23 is sufficiently small and the input gas temperature THCI is equal to or higher than the minimum temperature (for example, 150°C) necessary for promoting the oxidation of unburned fuel components in fuel added to exhaust for increasing the catalyst bed temperature. That is, when the amount of fuel collected on the wall of the exhaust manifold 23 is not sufficiently small or when the input gas temperature THCI is less than the minimum required temperature, addition of fuel to exhaust is prohibited. While addition of fuel to exhaust is prohibited, the process for detecting deactivation of the catalyst is not necessary. This is because drawback due to deactivation of the catalyst during the temperature increase process is caused by continuation of supply of unburned fuel to the catalyst despite the deactivated state of the catalyst. Therefore, as requirements for performing a process for detecting deactivated state of the catalyst, requirements (d) and (e) are appropriate.

At step S110, the electronic control device 50 judges whether the input gas temperature THCI is no less than a predetermined value D (first activation determination temperature D). The predetermined value D is the lowest exhaust temperature (for example, 400C) in a range in which supply of unburned fuel components reliably increase the catalyst bed temperature even if the exhaust temperature is relatively low with the requirements (b) and (c) being satisfied. When determining that the input gas temperature THCI is no less than the predetermined value D, the electronic control device 50 proceeds to step S120. At step S120, the electronic control device 50 sets the permission flag on and ends the routine. On the other hand, when the input gas temperature THCI is less than the predetermined value D, the electronic control device 50 suspends the routine without changing the state of the permission flag. Accordingly, after the permission flag is set on when an increase of the catalyst bed temperature is detected to be increased at least one time, the permission flag is held on even if the input gas temperature THCI falls below the predetermined value D thereafter.

As described above, the exhaust temperature in the temperature increase process is set relatively low in the routine shown in Fig. 3. Also, the permission flag is set on when the catalyst bed temperature is detected to be increased due to supply of unburned fuel components after the start of the temperature increase process.

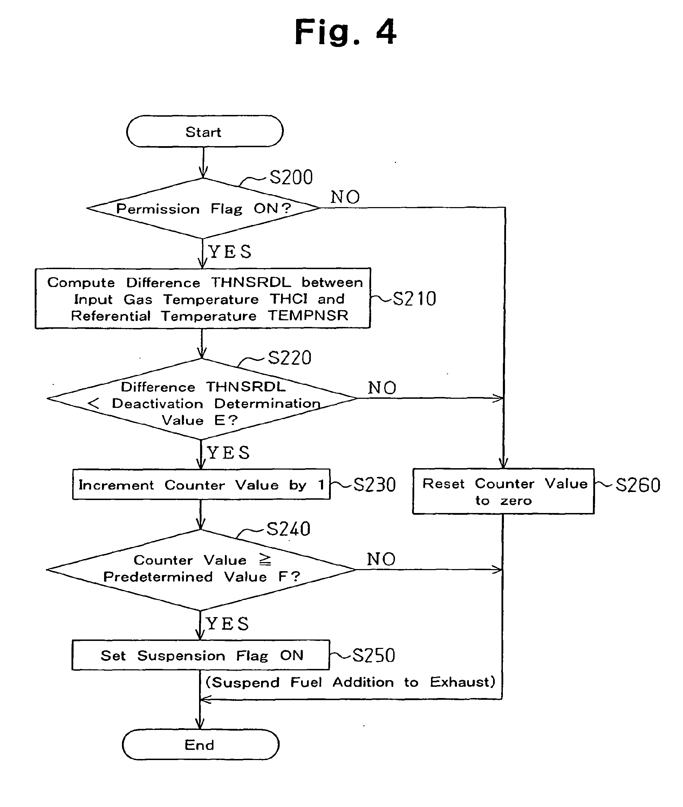

Fig. 4 shows a process routine related to the suspension process. The routine of Fig. 4 is executed subsequent to the routine of Fig. 3 by the electronic control device 50.

As shown in Fig. 4, the electronic control device 50 judges whether the permission flag is on at step S200. If the permission flag is off, the electronic control device 50 proceeds to step S260. At step S260, the electronic control device 50 resets the value of a counter to zero, and ends the routine. If the permission flag is on, the electronic control device 50 proceeds to step S210. At step S210, the electronic control device 50 computes the difference THNSRDL between the input gas temperature THCI and the referential temperature TEMPNSR.

At subsequent step S220, the electronic control device 50 judges whether the computed difference THNSRDL is less than a predetermined value E (deactivation determination value E, for example 100°C). That is, the electronic control device 50 determines whether the catalyst is in a deactivated state. If the difference THNSRDL is no less than the predetermined value E, the electronic control device 50 proceeds to step S260. At step S260, the electronic control device 50 resets the value of the counter to zero, and ends the routine. If the difference THNSRDL is less than the predetermined value E, the electronic control device 50 proceeds to step S230. At step S230, the electronic control device 50 increments the counter value by one. In this manner, the counter value continues to be incremented as long as the catalyst is in a deactivated state. Therefore, the counter value represents the duration of the deactivated state of the catalyst.

After step S230, the electronic control device 50 determines whether the counter value is equal to or more than a predetermined value F (duration determination value F) at step S240. That is, the electronic control device 50 determines whether the duration of the deactivated state has continued for a predetermined period (for example, ten seconds). If the counter value is no less than the predetermined value F, the electronic control device 50 proceeds to step S250. If not, the electronic control device 50 ends the routine. The electronic control device 50 sets the permission flag on at step S250, and ends the routine thereafter. When the permission flag is set on, the electronic control device 50 suspends addition of fuel to exhaust from the fuel adding valve 46.

As described above, the NOx catalyst is determined to be in a deactivated state when the difference THNSRDL between the input gas temperature THCI and the reference temperature TEMPNSR is less than the predetermined value E in this embodiment. Then, addition of fuel to exhaust is suspended when the catalyst bed temperature is increased by the supply of unburned fuel components after the start of the temperature increase process (that is, the input gas temperature THCI is no less than the predetermined value D), and a deactivated state of the catalyst has continued for the predetermined period under a state where the temperature of exhaust flowing into the NOx catalyst is low (that is, the estimated exhaust temperature THT4 is no higher than the predetermined value A).

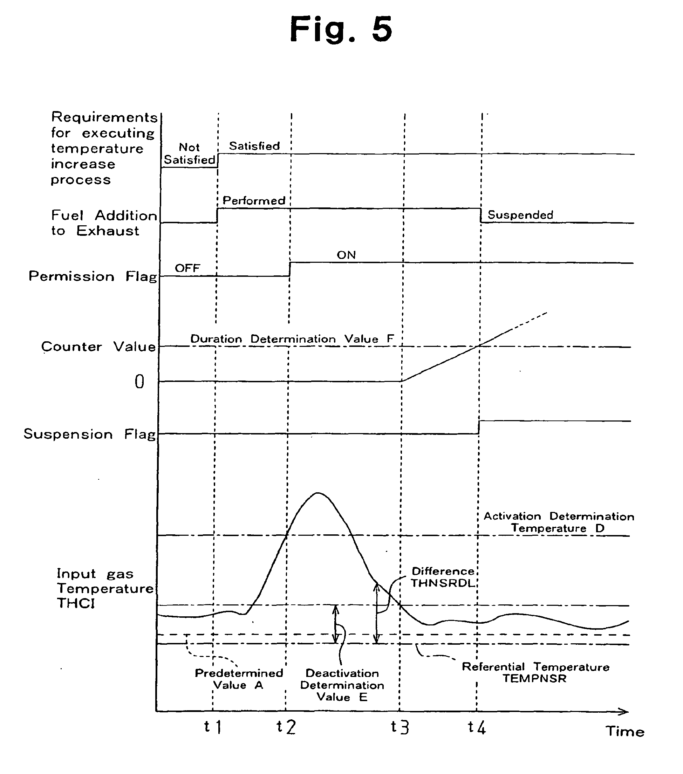

Fig. 5 shows a time chart of an execution of the suspension process. As shown in Fig. 5, suppose that all the requirements for performance of the temperature increase process are satisfied, and addition of fuel from the fuel adding valve 46 to exhaust is started at time t1. Immediately after the fuel addition is started, the catalyst bed temperature is increased normally by the fuel addition, and the input gas temperature THCI increases. Then, the input gas temperature THCI surpasses the predetermined value D (first activation determination temperature D). The permission flag is set on at this point of time (time t2).

When the NOx catalyst is deactivated after time t2, oxidation of unburned fuel components is slowed down. Thus, the input gas temperature THCI starts dropping as shown in Fig. 5. Therefore, the difference THNSRDL between the input gas temperature THCI and the reference temperature TEMPNSR falls below the predetermined value E (deactivation determination value E) after a while. When the difference THNSRDL falls below the predetermined value E (time t3), the counter value starts being incremented. Therefore, the counter value shortly surpasses the predetermined value F (duration determination value F). When the counter value surpasses the predetermined value F (time t4), the suspension flag is set on, and the addition of fuel from the fuel adding valve 46 to exhaust is suspended. Accordingly, a situation is avoided in which supply of unburned fuel is continued in spite of the fact that oxidation of supplied unburned fuel components is not sufficiently developing due to an deactivated state of the NOx catalyst. For purposes of illustration, the reference temperature TEMPNSR is depicted as a constant value in Fig. 5. However, the reference temperature TEMPNSR is continually renewed according to the operating condition of the engine 10, more specifically, to changes of the exhaust temperature.

In this embodiment, the routine shown in Fig. 3 and the routine shown in Fig. 4 are executed by the electronic control device 50, which functions as suspension means.

The preferred embodiment provides the following advantages.
(1) Addition of fuel to exhaust is suspended when the input gas temperature THCI, which is an indicator of the catalyst bed temperature, reaches the activation determination temperature D after the start of the temperature increase process, and the difference THNSRDL between the input gas temperature THCI and the reference temperature TEMPNSR falls below the deactivation determination value E. Accordingly, a deactivated state of the NOx catalyst is reliably detected. Thus, drawbacks caused by deactivation of the NOx catalyst, for example, white smoke and excessive temperature increase of the catalyst, are favorably avoided.
(2) When a deactivated state of the NOx catalyst is detected based on the difference THNSRDL, the reference temperature TEMPNSR, which is determined based on the history of operation of the engine 10, is used. Therefore, the second activation determination temperature (the sum of the reference temperature TEMPNSR and the deactivation determination value E), which is an indicator for determining whether the NOx is in an activated sate, is adequately changed according to temperature changes of exhaust flowing into the NOx catalyst. Thus, a deactivated state of the catalyst is accurately detected.
(3) The process for detecting a deactivated state of the NOx catalyst based on the difference THNSRDL is performed only under a condition in which the temperature of exhaust flowing into the NOx catalyst is low, or when the estimated exhaust temperature THT4 is no more than the predetermined value A. That is, addition of fuel to exhaust is suspended when a deactivated state of the NOx catalyst is detected based on the difference THNSRDL, and the temperature of exhaust flowing into the NOx catalyst is no more than the predetermined value. Therefore, a deactivated state of the NOx catalyst due to a low temperature of exhaust flowing into the NOx catalyst is accurately detected. Thus, erroneous suspension of addition of fuel to exhaust in a state where the NOx catalyst is not deactivated is favorably prevented.
(4) The temperature of exhaust after it has passed through the catalyst bed of the NOx catalyst converter 25 and the PM filter 26 is easily detected compared to the catalyst bed temperature. Therefore, instead of directly detecting the temperature of the catalyst bed, obtaining the temperature of the catalyst bed by using the temperature of exhaust that has passed through the catalyst bed as an indicator facilitates the detection of a deactivated state of the catalyst.

The above embodiment may be modified as follows.

### (First Modification)

In the above illustrated embodiment, a deactivated state of the NOx catalyst is detected using the input gas temperature THCI, which is estimated on the assumption that there is no heating of oxidation of unburned fuel components (exhaust purification reaction) due to deactivation of the NOx catalyst. That is, a deactivated state of the NOx catalyst is detected using the reference temperature TEMPNSR. The reference temperature TEMPNSR is continually renewed based on the history of the operating condition of the engine 10. The input gas temperature THCI that is estimated on the assumption that the NOx catalyst is sufficiently activated and the exhaust purification reaction is developing normally can be estimated based on the history of the operating condition like the reference temperature TEMPNSR. The input gas temperature THCI thus estimated is referred to as a normal-state input gas temperature. When the NOx catalyst is deactivated during the temperature increase process, the difference between the normal-state input gas temperature and the actual input gas temperature THCI is increased. Therefore, a difference THNSRDL' between the normal-state input gas temperature and the actual input gas temperature THCI may be used instead of the difference THNSRDL in the process for detecting a deactivated state of the catalyst and in the suspension process.

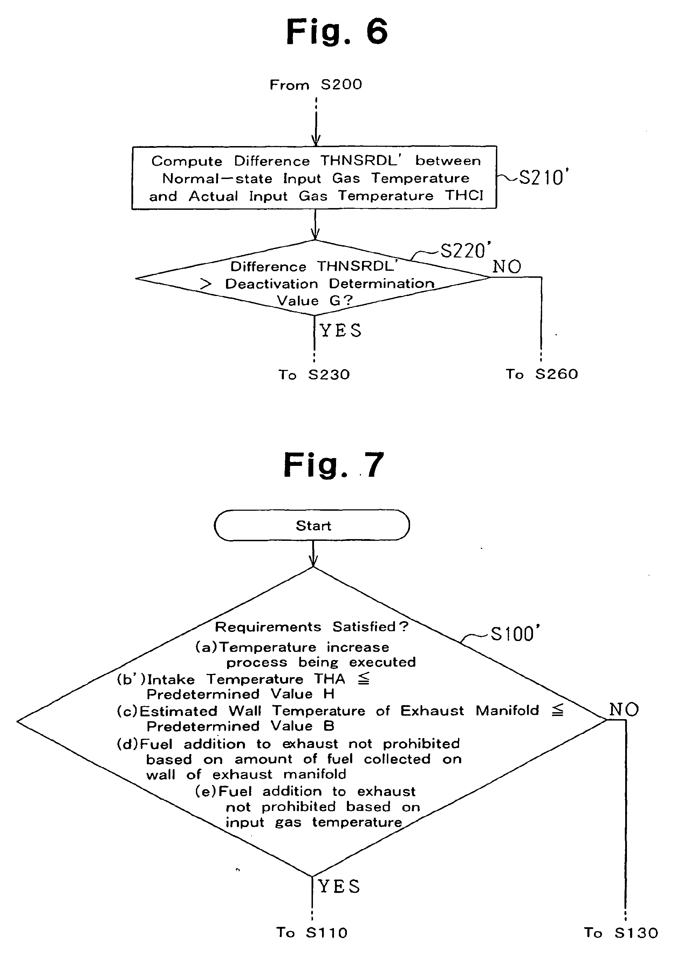

Such a modification is implemented by replacing steps S210 and S220 of the routine shown in Fig. 4 by steps S210' and S220' shown in Fig. 6. In this modification, the electronic control device 50 proceeds to step S210' when judging that the permission flag is on at step S200 of Fig. 4. At step S210', the electronic control device 50 computes the difference THNSRDL' between the normal-state input gas temperature and the actual input gas temperature THCI. In subsequent step S220', the electronic control device 50 judges whether the computed difference THNSRDL' is greater than a predetermined value G (deactivation determination value G). When the difference THNSRDL' is greater than the predetermined value G, the electronic control device 50 determines that the NOx catalyst is deactivated and proceeds to step S230 of Fig. 4. On the other hand, when the difference THNSRDL' is no greater than the predetermined value G, the electronic control device 50 proceeds to step S260 of Fig. 4.

### (Second Modification)

In the process routine of Fig. 3, the requirements for performing the process for detecting a deactivated state of the catalyst include the requirement (b) that the estimated exhaust temperature THT4 is no greater than the predetermined value A. When the estimated exhaust temperature THT4 is no greater than the predetermined value A, the temperature of exhaust flowing into the NOx catalyst is determined to be low. One of the factors of a temperature decrease in exhaust flowing into the NOx catalyst is a temperature decrease in air drawn into the combustion chambers 13 (the intake temperature THA). When the intake temperature is lowered, the temperature of exhaust discharged from the combustion chambers 13 is lowered even if the amount of heat generated by combustion in the combustion chambers 13 is the same, and the temperature of exhaust flowing into the NOx catalyst is lowered. Therefore, the requirement that the intake temperature THA is no greater than the predetermined temperature may be added to the requirements for performing the process for detecting a deactivated state of the catalyst or the suspension process. In this case also, when the NOx catalyst is not deactivated, addition of fuel to exhaust is not erroneously suspended.

Such a modification is implemented by replacing step S100 of the routine shown in Fig. 3 by steps S100' shown in Fig. 7. In this modification, the electronic control device 50 determines whether the requirements are satisfied using a requirement (b') that the intake temperature THA is no greater than a predetermined value H instead of the requirement (b) that the estimated exhaust temperature THT4 is no greater than the predetermined value A.

### (Other Modifications)

In the above embodiment and the first modification, the difference THNSRDL between the input gas temperature THCI and the reference temperature TEMPNSR or the difference TEMPNSR' between the input gas temperature THCI and the normal-state input gas temperature is computed. Then, the difference THNSRDL or the difference THNSRDL' is compared to the deactivation determination value E to determine whether the NOx catalyst is in a deactivated state. In contrast to this, a deactivated state of the NOx catalyst may be determined in the following manner. First, the deactivation determination value E is added to the reference temperature TEMPNDSR to obtain an activation determination temperature. Alternatively, the deactivation determination value G is subtracted from the normal-state input gas temperature to obtain an activation determination temperature. Next, the electronic control device 50 compares the obtained activation determination temperature with the input gas temperature THCI. If the input gas temperature THCI is no greater than the activation determination temperature, the electronic control device 50 determines that the NOx catalyst is in a deactivated state.

The activation determination temperature may be directly computed based, for example, on the history of the operating condition of the engine 10, and the determination of whether the NOx catalyst is in a deactivated state may be executed based on such activation determination temperature. If changes in the input gas temperature THCI due to temperature changes of exhaust flowing into the NOx catalyst have little effect on determination of a deactivated state of the NOx catalyst, a fixed activation determination temperature may be used.

In the above embodiment and the modifications, determination of a deactivated state of the NOx catalyst is performed using the input gas temperature THCI as an indicator of the catalyst bed temperature. Instead of the input gas temperature THCI, an output gas temperature detected by the output gas temperature sensor 29 may be used as an indicator of the catalyst bed temperature. If the internal combustion engine 10 has a sensor that directly detects the catalyst bed temperature, a deactivated state of the NOx catalyst may be determined using detected value of such a sensor.

In the above embodiment, supply of unburned fuel components to the NOx catalyst is performed by adding fuel to exhaust from the fuel adding valve 46. However, supply of unburned fuel components to the NOx catalyst may be performed in a different manner. For example, unburned fuel components may be supplied to the NOx catalyst by injecting fuel from the injector 40 in an expansion stroke or an exhaust stroke (sub-injection or after injection), which occur after fuel is injected from the injector 40 to be combusted in the combustion chambers 13 (pilot injection or main injection). In this case, if the NOx catalyst is detected to be in a deactivated state, the after injection is suspended so that drawbacks caused by the deactivation of the NOx are avoided.

The exhaust purifying apparatus of this embodiment may be incorporated in an internal combustion engine that has components different from those in the internal combustion engine 10.

The present examples and embodiments are to be considered as illustrative and not restrictive and the invention is not to be limited to the details given herein, but may be modified within the scope of the appended claims.

## Claims

1. An exhaust purifying apparatus that performs a temperature increase process, in which the apparatus supplies unburned fuel components to a catalyst provided in an exhaust system (14) of an internal combustion engine (10), thereby increasing a bed temperature of the catalyst, the apparatus being **characterized by**:
suspension means, wherein, in a case where the catalyst bed temperature is detected to be increased by supply of unburned fuel components after the start of the temperature increase process, the suspension means suspends the supply of unburned fuel components to the catalyst if the catalyst bed temperature is detected to be lowered to a level equal to or lower than an activation determination temperature that indicates that the catalyst is in an activated state.

2. The exhaust purifying apparatus according to claim 1, **characterized in that** the activation determination temperature is computed based on a history of the operating condition of the engine.

3. The exhaust purifying apparatus according to claim 1 or 2, **characterized in that** a decrease of the catalyst bed temperature to a level equal to or lower than the activation determination temperature is detected when the difference between the actual catalyst bed temperature and a catalyst bed temperature that is estimated on the assumption that no heat due to a reaction of exhaust purification is being produced is less than a predetermined value.

4. The exhaust purifying apparatus according to claim 1 or 2, **characterized in that** a decrease of the catalyst bed temperature to a level equal to or lower than the activation determination temperature is detected when the difference between the actual catalyst bed temperature and a catalyst bed temperature that is estimated on the assumption that a reaction of exhaust purification is developing normally is greater than a predetermined value.

5. The exhaust purifying apparatus according to any one of claims 1 to 4, **characterized in that** the suspension means suspends the supply of unburned fuel components to the catalyst when a further requirement that the temperature of exhaust flowing into the catalyst is equal to or lower than a predetermined temperature is satisfied.

6. The exhaust purifying apparatus according to any one of claims 1 to 4, **characterized in that** the suspension means suspends the supply of unburned fuel components to the catalyst when a further requirement that the temperature of air drawn into a combustion chamber (13) of the internal combustion engine is equal to or lower than a predetermined temperature is satisfied.

7. The exhaust purifying apparatus according to any one of claims 1 to 6, **characterized in that** the catalyst bed temperature is obtained by using the temperature of exhaust after passing through the catalyst as an indicator.

8. An exhaust purifying method in which a temperature increase process is performed, wherein, in the temperature increase process, unburned fuel components is supplied to a catalyst provided in an exhaust system (14) of an internal combustion engine (10), so that a bed temperature of the catalyst is increased, the method being **characterized by**:
detecting that the catalyst bed temperature is increased by supply of unburned fuel components after the start of the temperature increase process; and
in a case where the catalyst bed temperature is detected to be increased, suspending the supply of unburned fuel components to the catalyst if the catalyst bed temperature is detected to be lowered to a level equal to or lower than an activation determination temperature that indicates that the catalyst is in an activated state.

## Patentansprüche

1. Abgasreinigungsvorrichtung, die einen Temperaturerhöhungsprozess durchführt, indem die Vorrichtung unverbrannte Kraftstoffkomponenten zu einem Katalysator zuführt, der in einem Abgassystem (14) einer Brennkraftmaschine (10) vorgesehen ist, wodurch eine Betttemperatur des Katalysators erhöht wird, wobei die Vorrichtung **gekennzeichnet ist, durch**:
eine Aussetzungseinrichtung, wobei, in einem Fall, in dem die Katalysatorbetttemperatur erfasst ist, um **durch** eine Zufuhr von unverbranntem Kraftstoffkomponenten nach dem Start des Temperaturerhöhungsprozesses erhöht zu werden, die Aussetzungseinrichtung die Zufuhr von unverbrannten Kraftstoffkomponenten zu dem Katalysator aussetzt, falls die Katalysatorbetttemperatur erfasst ist, um auf ein Niveau gleich wie oder niedriger als eine Aktivierungsbestimmungstemperatur abgesenkt zu werden, die anzeigt, dass der Katalysator in einem aktivierten Zustand ist.

2. Abgasreinigungsvorrichtung nach Anspruch 1, **dadurch gekennzeichnet, dass** die Aktivierungsbestimmungstemperatur basierend auf einer Historie des Betriebszustands der Maschine berechnet ist.

3. Abgasreinigungsvorrichtung nach Anspruch 1 oder 2, **dadurch gekennzeichnet, dass** eine Abnahme der Katalysatorbetttemperatur auf ein Niveau gleich wie oder niedriger als die Aktivierungsbestimmungstemperatur erfasst ist, wenn die Differenz zwischen der Ist-Katalysatorbetttemperatur und einer Katalysatorbetttemperatur, die auf der Annahme geschätzt ist, dass keine Wärme aufgrund einer Reaktion einer Abgasreinigung erzeugt ist, geringer als ein vorbestimmter Wert ist.

4. Abgasreinigungsvorrichtung nach Anspruch 1 oder 2, **dadurch gekennzeichnet, dass** eine Abnahme der Katalysatorbetttemperatur auf ein Niveau gleich wie oder niedriger als die Aktivierungsbestimmungstemperatur erfasst ist, wenn die Differenz zwischen der Ist-Katalysatorbetttemperatur und einer Katalysatorbetttemperatur, die auf der Annahme geschätzt ist, dass sich eine Reaktion einer Abgasreinigung normal entwickelt, größer als ein vorbestimmter Wert ist.

5. Abgasreinigungsvorrichtung nach einem der Ansprüche 1 bis 4, **dadurch gekennzeichnet, dass** die Aussetzungseinrichtung die Zufuhr von unverbrannten Kraftstoffkomponenten zu dem Katalysator aussetzt, wenn ein weiteres Erfordernis, dass die Temperatur des Abgases, das in den Katalysator strömt, gleich wie oder niedriger als eine vorbestimmte Temperatur ist, erfüllt ist.

6. Abgasreinigungsvorrichtung nach einem der Ansprüche 1 bis 4, **dadurch gekennzeichnet, dass** die Aussetzungseinrichtung die Zufuhr von unverbrannten Kraftstoffkomponenten zu dem Katalysator aussetzt, wenn ein weiteres Erfordernis, dass die Temperatur der Luft, die in eine Brennkammer (13) der Brennkraftmaschine gezogen ist, gleich wie oder niedriger als eine vorbestimmte Temperatur ist, erfüllt ist.

7. Abgasreinigungsvorrichtung nach einem der Ansprüche 1 bis 6, **dadurch gekennzeichnet, dass** die Katalysatorbetttemperatur durch ein Verwenden des Temperatur des Abgases, nachdem es durch den Katalysator getreten ist, als ein Indikator erhalten ist.

8. Abgasreinigungsverfahren, in dem ein Temperaturerhöhungsprozess durchgeführt ist, wobei in dem Temperaturerhöhungsprozess unverbrannte Kraftstoffkomponenten zu einem Katalysator zugeführt werden, der in einem Abgassystem (14) einer Brennkraftmaschine (10) vorgesehen ist, so dass eine Betttemperatur des Katalysators erhöht wird, wobei das Verfahren **gekennzeichnet ist durch**:
Erfassen, dass die Katalysatorbetttemperatur **durch** eine Zufuhr von unverbrannten Kraftstoffkomponenten erhöht wird, nach dem Start des Temperaturerhöhungsprozesses; und
in einem Fall, in dem die Katalysatorbetttemperatur erfasst ist, um erhöht zu werden, ein Aussetzen der Zufuhr von unverbrannten Kraftstoffkomponenten zu dem Katalysator, falls die Katalysatorbetttemperatur erfasst ist, um auf ein Niveau gleich wie oder niedriger als eine Aktivierungsbestimmungstemperatur abgesenkt zu werden, die anzeigt, dass der Katalysator in einem aktivierten Zustand ist.

## Revendications

1. Appareil de purification des gaz d'échappement qui effectue un processus d'augmentation de la température, dans lequel l'appareil fournit des composants de carburant non brûlés à un catalyseur prévu dans un système d'échappement (14) d'un moteur à combustion interne (10), augmentant ainsi la température du lit du catalyseur, l'appareil étant **caractérisé par** :
un moyen de suspension, dans lequel, dans un cas où on détecte que la température du lit catalytique augmente par la fourniture des composants de carburant non brûlés après le début du processus d'augmentation de la température, le moyen de suspension suspend la fourniture des composants de carburant non brûlés au catalyseur si on détecte que la température du lit catalytique est abaissée jusqu'à un niveau inférieur ou égal à une température de détermination d'activation qui indique que le catalyseur est dans un état activé.

2. Appareil de purification des gaz d'échappement selon la revendication 1, **caractérisé en ce que** la température de détermination d'activation est calculée sur la base d'un historique de l'état de fonctionnement du moteur.

3. Appareil de purification des gaz d'échappement selon la revendication 1 ou 2, **caractérisé en ce qu'**une diminution de la température du lit catalytique jusqu'à un niveau inférieur ou égal à la température de détermination d'activation est détectée lorsque la différence entre la température effective du lit catalytique et une température du lit catalytique qui est estimée en supposant qu'il n'y a pas de chaleur produite par une réaction de purification d'échappement est inférieure à une valeur prédéterminée.

4. Appareil de purification des gaz d'échappement selon la revendication 1 ou 2, **caractérisé en ce qu'**une diminution de la température du lit catalytique jusqu'à un niveau inférieur ou égal à la température de détermination d'activation est détectée lorsque la différence entre la température effective du lit catalytique et une température du lit catalytique qui est estimée en supposant qu'une réaction de purification des gaz d'échappement se développe normalement est supérieure à une valeur prédéterminée.

5. Appareil de purification des gaz d'échappement selon l'une quelconque des revendications 1 à 4, **caractérisé en ce que** le moyen de suspension suspend la fourniture des composants de carburant non brûlés au catalyseur lorsqu'une condition supplémentaire qui consiste en ce que la température des gaz d'échappement circulant dans le catalyseur est inférieure ou égale à une température prédéterminée est satisfaite.

6. Appareil de purification des gaz d'échappement selon l'une quelconque des revendications 1 à 4, **caractérisé en ce que** le moyen de suspension suspend la fourniture des composants de carburant non brûlés au catalyseur lorsqu'une condition supplémentaire qui consiste en ce que la température de l'air aspiré dans une chambre de combustion (13) du moteur à combustion interne est inférieure ou égale à une température prédéterminée est satisfaite.

7. Appareil de purification des gaz d'échappement selon l'une quelconque des revendications 1 à 6, **caractérisé en ce que** la température du lit catalytique est obtenue en utilisant la température des gaz d'échappement après avoir passé à travers le catalyseur comme indicateur.

8. Procédé de purification des gaz d'échappement dans lequel un processus d'augmentation de la température est effectué, dans lequel, dans le processus d'augmentation de la température, les composants de carburant non brûlés sont fournis à un catalyseur prévu dans un système d'échappement (14) d'un moteur à combustion interne (10), de sorte qu'une température du lit catalytique soit augmentée, le procédé étant **caractérisé par** le fait :
de détecter que la température du lit catalytique est augmentée par la fourniture des composants de carburant non brûlés après le début du processus d'augmentation de la température ; et
dans un cas où on détecte que la température du lit catalytique est augmentée, la suspension de la fourniture des composants de carburant non brûlés au catalyseur si on détecte que la température du lit catalytique est abaissée jusqu'à un niveau inférieur ou égal à une température de détermination d'activation qui indique que le catalyseur est dans un état activé.
